# EUROPÄISCHE PATENTANMELDUNG

(11) **EP 1 281 472 A2**
(43) Veröffentlichungstag der Anmeldung: **05.02.2003**
(21) Anmeldenummer: 02017208.6
(22) Anmeldetag: 31.07.2002
(51) Int. Cl.: B23Q 1/70

(54) **Spindelvorrichtung für eine Werkzeugmaschine**

(30) Priorität: 31.07.2001 DE 10137194
(71) Anmelder: Franz Kessler KG, 88422 Bad Buchau (DE)
(72) Erfinder: Herwanger, Eckhard, Dipl.-Ing., 88422 Bad Buchau (DE); Rondé, Uwe, Dr.-Ing., 88422 Bad Buchau (DE)
(74) Vertreter: Patentanwälte Eisele, Otten, Roth & Dobler

(57) **Zusammenfassung**

Es wird eine Spindelvorrichtung für eine Werkzeugmaschine vorgeschlagen, bei der der Aufwand und die Kosten für die Herstellung, Wartung und Reparatur reduziert wird. Dies wird erfindungsgemäß dadurch erreicht, dass die Spindelwelle (10) ohne zusätzliches Spindelgehäuse unmittelbar im Spindelkasten (1) gelagert wird.

## Beschreibung

Die Erfindung betrifft eine Spindelvorrichtung für eine Werkzeugmaschine nach dem Oberbegriff des Anspruchs 1.

Bei handelsüblichen Werkzeugmaschinen mit bekanntem Aufbau findet zur Erzeugung einer Drehbewegung eines Werkzeugs oder eines Werkstücks eine Spindel Verwendung, die entweder als mechanische Spindel oder als Motorspindel ausgeführt ist. Die mechanische Spindel zeichnet sich durch eine Welle zur Werkzeug- oder Werkstückaufnahme aus, die an der der Arbeitseite abgewandten Seite über Riemen, Getriebe oder direkte Kupplung mit einem Motor verbunden ist. Die Motorspindel zeichnet sich dadurch aus, dass die Welle, in die das Werkzeug oder Werkstück integriert ist, gleichzeitig auch den Rotor des antreibenden Motors beinhaltet.

Bei beiden Konstruktionsprinzipien wird bei einem Aufbau gemäß dem bekannten Stand der Technik die komplette Spindel in ein Gehäuse eingebaut, welches bei der Monatage in einen Spindelkasten eingesetzt wird, der mit Bewegungselementen der Werkzeugmaschine verbunden ist (vgl. z.B. DE 41 22 545 A1). Diese Bewegungselemente bestehen in der Regel aus Linearführungen mit sogenannten Achsantrieben.

Dies bedeutet, dass insbesondere die Welle einschließlich der Spindellagerung und dem Spindelflansch sowie gegebenenfalls bei einer Motorspindel das Magnetsystem des Rotors im Allgemeinen in ein erstes Gehäuse bzw. das Spindelgehäuse, das gegebenenfalls bei einer Motorspindel den Stator enthält, und dieses wiederum in ein zweites Gehäuse, den Spindelkasten, eingebaut wird. Das zweite Gehäuse bzw. der Spindelkasten wird mit den Bewegungselementen verbunden bzw. in die Werkzeugmaschine eingebaut.

In der Praxis werden die Begriffe Spindelgehäuse und Spindelkasten und Spindelwelle unterschiedlich gebraucht. Gemäß der Erfindung wird der am verbreitetsten Definition gefolgt, so dass als Welle die Spindelwelle, als erstes Gehäuse das Spindelgehäuse und als zweites Gehäuse der Spindelkasten verstanden wird.

Die Spindeleinheit, d.h. vor allem die komplette Spindel mit dem ersten Gehäuse (vgl. z.B. DE 41 22 545 A1), stellt gemäß dem Stand der Technik eine Baueinheit dar, die separat handzuhaben ist und auch als solche hergestellt und vertrieben wird. Der Spindelkasten hingegen ist in der Regel integraler Bestandteil der Werkzeugmaschine.

Aufgabe der Erfindung ist es, den Aufwand und die Kosten für die Herstellung, Wartung und Reparatur solcher Spindeleinheiten zu reduzieren.

Diese Aufgabe wird, ausgehend von einem Stand der Technik der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Spindelvorrichtung dadurch aus, dass die Spindelwelle ohne zusätzliches Spindelgehäuse, d.h. ohne erstes Gehäuse, unmittelbar im Spindelkasten, d.h. im somit sogenannten "zweiten" Gehäuse, gelagert ist. Dies bedeutet, dass nicht zwei separate Gehäuse in die Bewegungselemente bzw. die Werkzeugmaschine eingebaut werden, sondern dass lediglich ein einzelnes, separates Gehäuse bzw. der Spindelkasten gemäß oben angeführter Definition verwendet wird. Vorteilhafterweise ist die Werkzeugmaschine bzw. deren Bewegungselemente oder dergleichen als Gehäuse gemäß der Erfindung ausgebildet.

Durch eine derartige, erfindungsgemäße integrierte Bauweise ergibt sich eine deutliche Aufwandsreduzierung des gesamtem Spindelsystems. Neben der Möglichkeit, einen sehr kompakten Aufbau zu realisieren, ergibt sich als weiterer Vorteil die Möglichkeit, das komplette System einschließlich Spindelkasten außerhalb der eigentlichen Werkzeugmaschine testen zu können.

Diese Verminderung des Aufwands trägt nicht nur bei der Herstellung, sondern auch bei der Wartung und Reparatur die entsprechenden Vorteile mit sich, da im Falle eines Austauschs nicht mehr die komplette Spindeleinheit samt Spindelgehäuse, sondern nur der innere Aufbau der Spindelwelle mit Lagerung ersetzt werden muss.

In einer vorteilhaften Weiterbildung der Erfindung umfasst der Spindelkasten einen Stator eines elektromagnetischen Spindelantriebs. Hierdurch wird eine erfindungsgemäße Motorspindel in besonders kompakter Bauweise möglich, da eine separate Aufhängung oder Befestigung des Stators entfällt.

In einer Weiterbildung dieser Ausführungsform werden weitere in Bezug auf den Spindelkasten statische Bauelemente, insbesondere elektrische Leitungen und/oder Fluidleitungen ebenfalls in den Spindelkasten integriert. So kann die Energiezuführung zur Ansteuerung des Stators und auch die Zufuhr von Kühl- und/oder Schmiermittel im Spindelkasten untergebracht beziehungsweise in dessen Formgebung mit einbezogen werden. Auch die üblicherweise erforderliche Kühleinrichtung für die Motorspindel kann vorteilhafterweise ganz oder teilweise in den Spindelkasten integriert werden.

Hierzu wird in einer vorteilhaften Ausführungsform der Erfindung der Spindelkasten im Bereich des elektromagnetischen Stators entsprechend ausgeformt. Vorzugsweise werden zu diesem Zweck Kühlkanäle, beispielsweise in Form von Ringnuten an der Innenwandung des Spindelkastens angebracht, die mit dem Einbau des elektromagnetischen Stators durch diesen innenseitig verschlossen werden. Diese Bauweise zeichnet sich einerseits durch einen geringen Fertigungsaufwand aus. Andererseits kann der Stator mit einer sehr dünnen Abdichtung versehen und ohne weitere störende Trennwände eingebaut werden. Die Effizienz der erforderlichen Kühlung wird hierdurch verbessert.

Eine erfindungsgemäße Spindelvorrichtung wird, insbesondere in einer der oben beschriebenen Ausführungen, vorteilhafterweise mit einer Spindelwelle versehen, die einen Rotor des elektromagnetischen Spindelantriebs umfasst. Letztendes kann auf diese Weise die Spindelvorrichtung so aufgebaut werden, dass sie lediglich aus zwei voneinander lösbaren Baueinheiten gebildet wird, einerseits dem Spindelkasten mit integrierten statischen Bauelementen und andererseits der Spindelwelle in Baueinheit mit allen drehbaren Baukomponenten, vorzugsweise in Kombination mit den zugehörigen Lagerungen. Insbesondere die Montage und Reparatur der erfindungsgemäßen Spindelvorrichtung wird hierdurch vereinfacht, indem die innere, drehbare Spindeleinheit dem Spindelkasten entnehmbar ausgebildet wird.

Vorteilhafterweise umfasst diese innere Spindeleinheit auch die vordere und hintere Lagerung für den Spindelrotor beziehungsweise die Spindelwelle. Hierdurch wird vor allem die Reparatur bei einem Lagerdefekt vereinfacht, da der Austausch des defekten Lagers an der inneren, aus dem Spindelkasten entnehmbaren Spindeleinheit durchzuführen ist.

Insbesondere in der vorgenannten Ausführungsform ist ein Spindelantrieb mit Permanenterregung von Vorteil, bei dem die Permanentmagnete unmittelbar auf dem Spindelrotor, beziehungsweise der Spindelwelle aufgebracht werden. Eine solche innere Spindeleinheit mit Permanentmagneten ist gegenüber einem Asynchronmotor mit besonders kleinem Außendurchmesser dimensionierbar, woraus sich ein kleineres Massenträgheitsmoment mit kleinerer Störkontur ergibt.

Vorzugsweise wird die Spindelwelle zusammen mit den daran angebrachten Komponenten so ausgebildet, dass sie in einer Richtung parallel zur Spindelachse zur Arbeitsseite hin und/oder von der Arbeitsseite weg aus dem Spindelkasten entnehmbar ist. Eine solche Ausführungsform zeichnet sich durch besondere Montagefreundlichkeit aus. Zudem kann der Spindelkasten mit Ausnahme der inneren Aufnahme für den Rotor beziehungsweise die Spindelwelle als geschlossene Einheit ausgeführt werden.

Um eine solche achsenparallele Entnahme zumindest in einer Richtung zu ermöglichen, müssen die Spindelwelle beziehungsweise die auf der Spindelwelle aufgebrachten Komponenten Außenmaße aufweisen, die kleiner oder gleich zu dem freien Querschnitt der in Ausziehrichtung der vorliegenden Bereiche des Spindelkastens beziehungsweise der in den Spindelkasten integrierten Bauelemente sind.

Die erfindungsgemäße Spindelvorrichtung findet vorzugsweise Einsatz in sogenannten Horizontal- und/oder Vertikalfräsmaschinen. Vorzugsweise für diesen Einsatzzweck wird das Bewegungselement für den Spindelkasten als Linearführung ausgeführt. Es ist jedoch ohne weiteres auch ein anderweitiger Einsatz der erfindungsgemäßen Spindelvorrichtung, beispielsweise in einem Werkzeugroboter denkbar, bei der das Bewegungselement auch anderweitig zum Beispiel als Drehführung oder dergleichen ausgestaltet werden kann.

Wesentlich bei der Erfindung ist der Umstand, dass der Spindelkasten, der das Bewegungselement wenigstens teilweise umfasst beziehungsweise mit Anschlusselementen zum Anschluss an ein oder mehrere Bewegungselemente versehen ist, für die oben geschilderte erfindungsgemäße Aufnahme der Spindelwelle beziehungsweise des Spindelrotors ohne separates Spindelgehäuse ausgebildet ist.

Ein Ausführungsbeispiel der Erfindung ist in der Zeichnung dargestellt und wir anhand der Figuren nachfolgend näher erläutert.

Im Einzelnen zeigen:
- Figur 1: eine Teildarstellung eines Spindelkastens einer erfindungsgemäßen Spindelvorrichtung im Längsschnitt,
- Figur 2: eine innere Spindeleinheit für eine erfindungsgemäße Spindelvorrichtung im Längsschnitt,
- Figur 3: die zusammengesetzte Spindelvorrichtung gemäß der Erfindung im Längsschnitt,
- Figur 4: einen Längsschnitt durch eine Spindelvorrichtung gemäß dem bisherigen Stand der Technik,
- Figur 5: eine schematische Darstellung einer Werkzeugmaschine mit einer Spindelvorrichtung im Längsschnitt gemäß dem bisherigen Stand der Technik und
- Figur 6: eine schematische Darstellung einer Werkzeugmaschine mit einer erfindungsgemäßen Spindelvorrichtung im Längsschnitt.

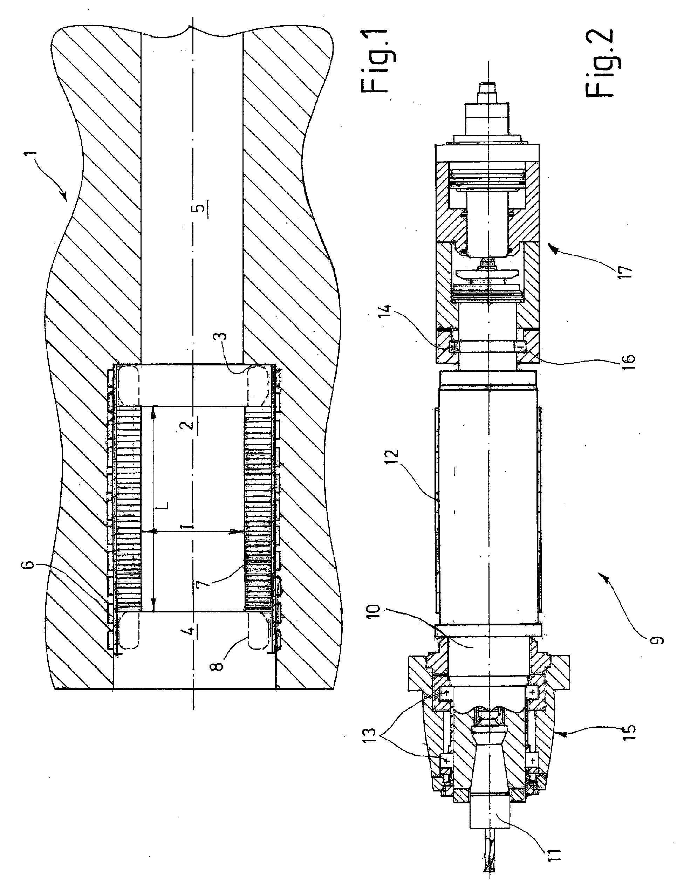

Figur 1 zeigt einen Spindelkasten 1, der aufgrund seiner äußeren Maße nur teilweise ohne seine Außenkontur und dementsprechend auch ohne die damit verbundenen oder darin integrierten Bewegungselemente dargestellt ist. Der Spindelkasten weist eine Innenbohrung 2 auf, die durch eine Abstufung 3 in einen vorderen Bereich 4 mit größerem Querschnitt und einem hinteren Bereich 5 mit kleinerem Querschnitt unterteilt ist.

Im vorderen Bereich 4 sind Ringnuten 6 über eine Länge L am Innenumfang der Innenbohrung 2 angebracht, die im Wesentlichen der Länge eines in den Spindelkasten 1 einzubringenden elektromagnetischen Stators 7 entspricht. Die Spulenenden 8 des Stators 7 sind gestrichelt angedeutet.

Die Ringnuten 6 bilden gemeinsam mit dem Außenumfang des Stators 7 ringförmige Kanäle, die zur Kühlung des Elektroantriebs der erfindungsgemäßen Spindelvorrichtung verwendbar sind. Die Zuleitung der Kühlflüssigkeit kann ebenso wie elektrische Zuführungen oder Schmiermittelzuführungen auf nicht näher dargestellte Weise ebenfalls im Spindelkasten 1 untergebracht werden.

Der Innendurchmesser I des Stators 7 entspricht in der dargestellten Ausführungsform dem Innendurchmesser des hinteren Bereichs 5.

Die innere Baueinheit 9 gemäß Figur 2 umfasst eine Spindelwelle 10 mit einer Aufnahme für ein Werkzeug oder Werkstück 11. Weiterhin trägt die Spindelwelle 10 einen oder mehrere Permanentmagnete 12 und umfasst somit den Rotor eines elektromagnetischen Spindelantriebs mit Permanenterregung.

Darüber hinaus ist die vordere Lagerung 13 sowie die hintere Lagerung 14 der Spindelwelle 10 Bestandteil der inneren Spindeleinheit 9. Die vordere Lagerung 13 verbindet hierbei die drehbare Spindelwelle 10 mit dem Spindelkopf 15. Die hintere Lagerung 14 liegt in einem Lagerschild 16, der formschlüssig in den hinteren Bereich 5 des Spindelkastens passt. Die weiteren im hinteren Bereich 5 untergebrachten Baukomponenten 17 entsprechen bekannten Spindelvorrichtungen mit den jeweiligen Funktionen.

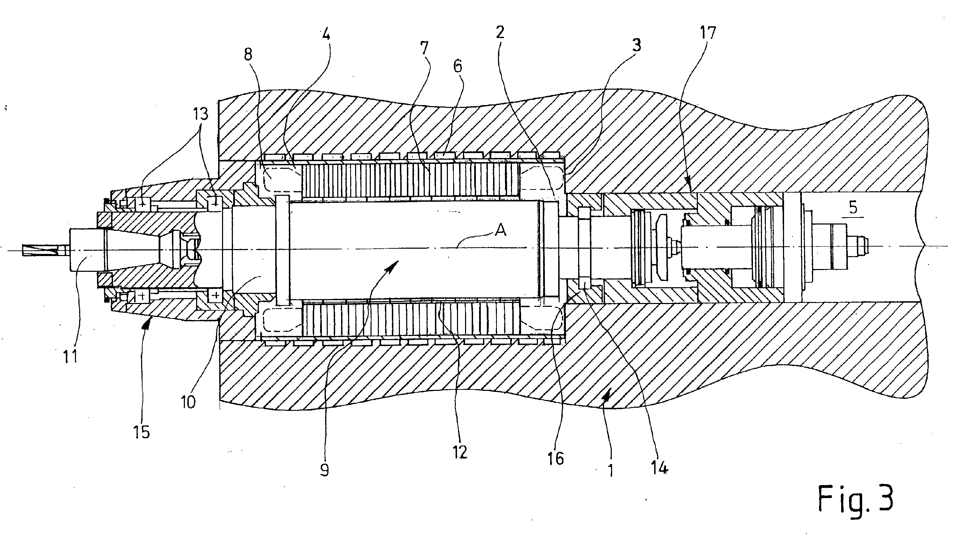

In Figur 3 ist der zusammengebaute Zustand erkennbar, in dem die innere Spindeleinheit 9 in den Spindelkasten 1 eingefügt ist. In dieser Darstellung ist erkennbar, dass alle hinteren Baukomponenten 17 gemeinsam mit der hinteren Lagerung 14 im Lagerschild 16, die an den Innenquerschnitt des hinteren Bereichs 5 der Innenbohrung 2 des Spindelkastens 1 angepasst sind, aufgrund der Dimensionierung des Stators 7 durch dessen freien Innenquerschnitt hindurchpassen. Die gesamte innere Spindeleinheit 9 kann somit von der Vorderseite, d.h. der werkzeugseitigen Seite des Spindelkastens 1 hin entnommen, und in Gegenrichtung in den Spindelkasten 1 eingeschoben werden. Im Falle eines Defekts, insbesondere eines Lagerdefekts kann dieser durch Entnahme der inneren Spindeleinheit 9 entlang der Achse A der Spindelvorrichtung zur Vorderseite hin, d.h. zur Seite des Werkzeugs 11 hin, dem Spindelkasten 1 entnommen werden. Anschließend kann ein defektes Lager problemlos an der inneren Spindeleinheit ausgetauscht und gemeinsam mit der inneren Spindeleinheit wieder in den Spindelkasten 1 zurückgeführt werden. Die gleichen Vorteile im Hinblick auf die Montage, Wartung oder Reparatur bieten sich für alle in die innere Spindeleinheit 9 integrierten Bauelemente.

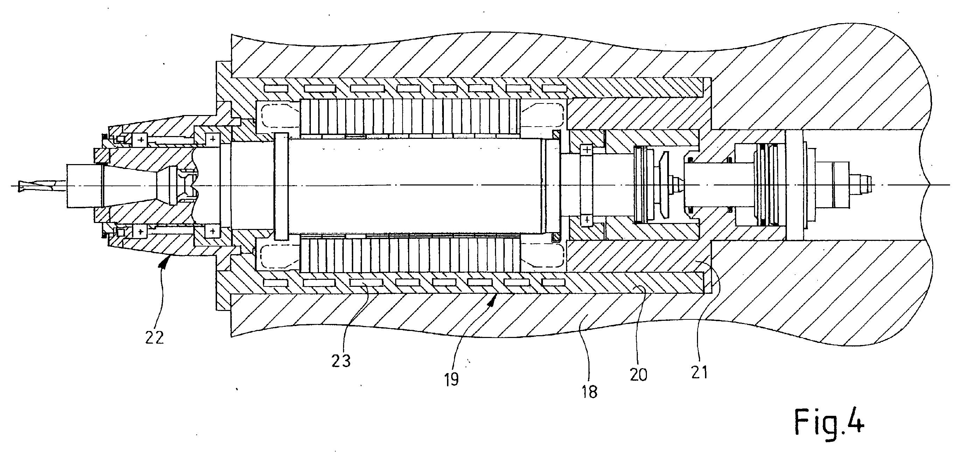

Der Unterschied gemäß dem Stand der Technik wird anhand von Figur 4 erkennbar, in der der Spindelkasten 18 lediglich als Verbindungselement zwischen Bewegungselementen und der eigentlichen Spindelvorrichtung 19 dient. Dementsprechend ist die Spindelvorrichtung 19 in dieser Ausführungsform eine in sich geschlossene Einheit mit einem Spindelgehäuse 20, das durch einen hinteren Flansch 21 und einen vorderen Spindelkopf 22 geschlossen ist.

In dieser Ausführungsform sind die Kühlkanäle 23 in der Wandung des Spindelgehäuses 20 untergebracht. Neben dem zusätzlichen Aufwand bei der Ausgestaltung einer solchen in sich geschlossenen Spindelvorrichtung 19 ist ohne weiteres erkennbar, dass die Kühlung durch die Kühlkanäle 23 aufgrund der dazwischen liegenden Wandung des Spindelgehäuses 20 weniger effektiv im Vergleich zur erfindungsgemäßen Ausführung arbeitet, weshalb eine entsprechend größere Kühlkapazität vorzusehen ist.

Darüber hinaus ist ohne weiteres verständlich, dass die Anschlüsse zur Versorgung der Spindelvorrichtung 19 mit Energie, d.h. Strom und Fluiden zur Kühlung und Schmierung erheblich aufwendiger ist, da diese Zuführungen durch das geschlossene Gehäuse 20 bzw. den Endflansch 21 durchzuführen sind.

Weiterhin fand durch die getrennte Bauform des Spindelkastens 18, der mit Bewegungselementen der zugehörigen Werkzeugmaschine verbunden ist und der Spindelvorrichtung 19 eine getrennte Fertigung und Erprobung statt. Die Spindeleinheit 19 wurde als fertige Einheit in den Spindelkasten 18 in die entsprechende Werkzeugmaschine eingesetzt, wobei es anschließend hin und wieder zu Funktionsstörungen oder Beeinträchtigungen kommen konnte.

Nunmehr wird der Spindelkasten 1 gemeinsam mit der inneren Spindeleinheit 9 und gegebenenfalls den zughörigen Bewegungselementen gemeinsam gefertigt montiert und getestet. Fehlfunktionen, beispielsweise aufgrund der Beeinträchtigung der Kühlfunktion oder mechanischen Beeinträchtigungen durch den Spindelkasten nach dem Einbau in die entsprechende Werkzeugmaschine sind bei einer Spindelvorrichtung gemäß der Erfindung prinzipiell ausgeschlossen.

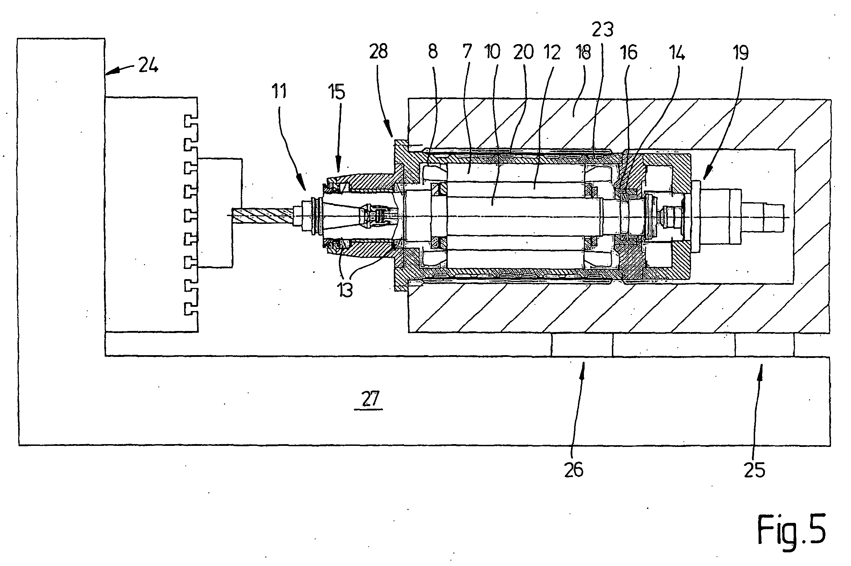

In Figur 5 wird ein als Spindelmotor ausgebildeter Asynchronmotor in einer Werkzeugmaschine 24 verwendet. Der Spindelkasten 18 ist hierbei integraler Bestandteil der Werkzeugmaschine 24 und das Spindelgehäuse 20 ermöglicht das herausnehmen der funktionsfähigen und gegebenenfalls separat zu betreibenden bzw. zu testenden Spindelvorrichtung 19.

Der Spindelkasten 18 kann gemäß Figur 5 mittels Linearführungen 25, 26 unter anderem längs einer Achse 27 der Werkzeugmaschine 24 in bekannter Weise verfahren werden. Am Spindelkasten 18 bzw. zweiten Gehäuse 18 ist das erste Gehäuse 20 bzw. Spindelgehäuse mittels Schraubverbindung 28 befestigt.

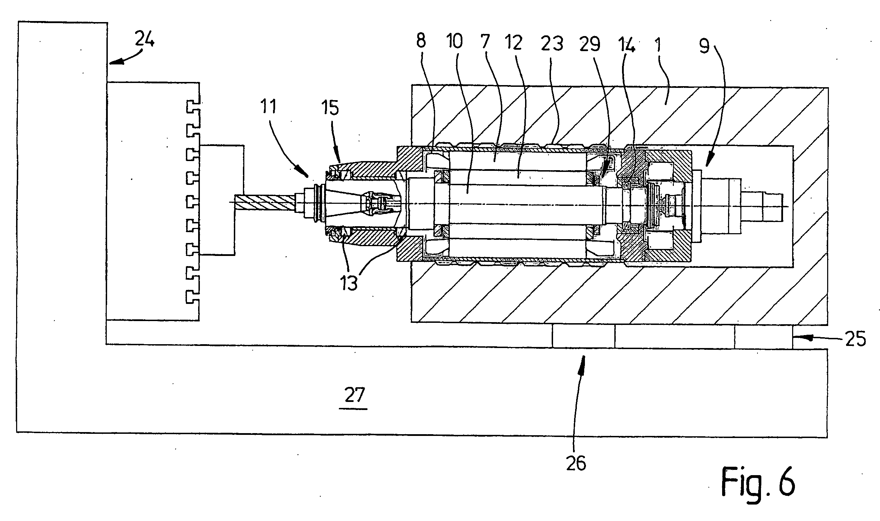

Im Gegensatz zum Stand der Technik gemäß Figur 5 ist in Figur 6 eine Werkzeugmaschine 24 mit einer Spindelvorrichtung bzw. inneren Spindeleinheit 9 gemäß der Erfindung schematisch dargestellt. Im Vergleich zwischen den beiden Figuren 5 und 6 wird deutlich, dass die inneren Spindeleinheit 9 ohne ein separates Spindelgehäuse in den Spindelkasten 1 eingebaut wird. Gemäß der Erfindung umfasst der Spindelkasten 1 einerseits den Stator 7 und andererseits ist der Spindelkasten 1 einschließlich der Kühlkanäle integraler Bestandteil der Werkzeugmaschine 24 bzw. wird unmittelbar mittels der Linearführungen 25, 26 längs der Achse 27 verfahren. Hierdurch kann insbesondere eine wesentlich kompaktere Einheit bei verringertem konstruktiven Aufwand realisiert werden.

### Bezugszeichenliste:

- 1: Spindelkasten
- 2: Innenbohrung
- 3: Abstufung
- 4: vorderer Bereich
- 5: hinterer Bereich
- 6: Ringnut
- 7: Stator
- 8: Spulenende
- 9: innere Spindeleinheit
- 10: Spindelwelle
- 11: Werkzeug
- 12: Permanentmagnet
- 13: vordere Lagerung
- 14: hintere Lagerung
- 15: Spindelkopf
- 16: Lagerschild
- 17: Komponente
- 18: Spindelkasten
- 19: Spindelvorrichtung
- 20: Spindelgehäuse
- 21: Flansch
- 22: Spindelkopf
- 23: Kühlkanal
- 24: Werkzeugmaschine
- 25: Linearführung
- 26: Linearführung
- 27: Achse
- 28: Schraubverbindung
- 29: Kurzschlußringe

## Patentansprüche

1. Spindelvorrichtung für eine Werkzeugmaschine mit einem Spindelkasten und einer drehbar gelagerten Spindelwelle, **dadurch gekennzeichnet, dass** die die Spindelwelle (10) umfassende innere Spindeleinheit (9) ohne zusätzliches Spindelgehäuse (20) unmittelbar im Spindelkasten (1) gelagert ist.

2. Spindelvorrichtung nach Anspruch 1, **dadurch gekennzeichnet, dass** der Spindelkasten (1) einen Stator (7) eines elektromagnetischen Spindelantriebs umfasst.

3. Spindelvorrichtung nach einem der vorgenannten Ansprüche, **dadurch gekennzeichnet, dass** in dem Spindelkasten (1) im Bereich des Stators (7) Kühlkanäle (6) vorgesehen sind.

4. Spindelvorrichtung nach einem der vorgenannten Ansprüche, **dadurch gekennzeichnet, dass** der Spindelkasten (1) elektrische Leitungen und/oder Fluidleitungen umfasst.

5. Spindelvorrichtung nach einem der vorgenanten Ansprüche, **dadurch gekennzeichnet, dass** die innere, die Spindelwelle (10) umfassende Spindeleinheit (9) parallel zur Spindelachse (A) zur Arbeitsseite hin und/oder von der Arbeitsseite weg aus dem Spindelkasten (1) entnehmbar ist.

6. Spindelvorrichtung nach einem der vorgenannten Ansprüche, **dadurch gekennzeichnet, dass** die Spindelwelle (10) einen Rotor des elektromagnetischen Spindelantriebs umfasst.

7. Spindelvorrichtung nach einem der vorgenannten Ansprüche, **dadurch gekennzeichnet, dass** der Rotor wenigstens einen Permanentmagneten (12) umfasst.

8. Spindelvorrichtung nach einem der vorgenannten Ansprüche, **dadurch gekennzeichnet, dass** die entnehmbare innere Spindeleinheit (9) die beidseitigen Lagerungen (13, 14) der Spindelwelle (10) umfasst.

9. Spindelvorrichtung nach einem der vorgenannten Ansprüche, **dadurch gekennzeichnet, dass** der Spindelkasten (1) ein Bewegungselement (25, 26) umfasst.

10. Spindelvorrichtung nach einem der vorgenannten Ansprüche, **dadurch gekennzeichnet, dass** das Bewegungselement (25, 26) eine Linearführung (25, 26) ist.

11. Werkzeugmaschine, insbesondere Dreh-, Schleif-, Horizontal- und/oder Vertikalfräsmaschine, **dadurch gekennzeichnet, dass** eine Spindelvorrichtung gemäß einem der vorgenannten Ansprüche vorgesehen ist.

12. Werkzeugroboter, **dadurch gekennzeichnet, dass** eine Spindelvorrichtung gemäß einem der vorgenannten Ansprüche vorgesehen ist.
